# EUROPÄISCHE PATENTSCHRIFT

(11) **EP 0 623 267 B1**
(45) Veröffentlichungstag und Bekanntmachung des Hinweises auf die Patenterteilung: **01.03.2000**
(21) Anmeldenummer: 94901861.8
(22) Anmeldetag: 24.11.1993
(51) Int. Cl.: H04M 1/00, H04Q 11/04

(54) **MODULARE TEILNEHMEREINRICHTUNG**
MODULAR SUBSCRIBER APPARATUS
DISPOSITIF MODULAIRE TELEPHONIQUE D'ABONNE

(30) Priorität: 26.11.1992 DE 4239656
(43) Veröffentlichungstag der Anmeldung: 09.11.1994
(73) Patentinhaber: GRUNDIG Aktiengesellschaft, 90762 Fürth (DE)
(72) Erfinder: JANOSCH, Joachim, D-96050 Bamberg (DE); EIBENBERGER, Konrad, D-90427 Nürnberg (DE)
(86) Internationale Anmeldenummer: EP9303293
(87) Internationale Veröffentlichungsnummer: WO9413087

(56) Entgegenhaltungen:
- EP-A- 0 141 289
- EP-A- 0 242 770
- EP-A- 0 355 714
- EP-A- 0 437 396
- DE-A- 3 630 529
- DE-C- 4 136 546

## Beschreibung

Die Erfindung betrifft eine modulare Teilnehmereinrichtung nach dem Oberbegriff des Patentanspruchs 1.

Aus der EP-A2-0 363 956 ist eine Dateneingabe- und Datenverarbeitungseinrichtung bekannt, die mit einem Telefon verbunden werden kann. Hierbei eröffnet die Dateneingabe- und Datenverarbeitungseinrichtung die Möglichkeit verschiedene Daten, wie z.B. Namen, Adressen und Telefonnummern einzugeben und zu speichern. Das Telefon hat die bekannten Funktionen zum Verbindungsaufbau, Durchführen von Fernsprechverkehr und Auslösen einer Verbindung in einem PSTN. Wird die Dateneingabe- und Datenverarbeitungseinrichtung mit dem Telefon verbunden, ermöglicht diese Kombination eine einfachere und komfortablere Bedienung des Telefons.

Mittels einer solchen Kombination kann zwar die Bedienung des Telefons vereinfacht werden, sie bietet jedoch keinen Zugang zu weiteren Telekommunikationsdiensten, wie beispielsweise Teletex- oder Telefaxübertragung. Weiterhin ist die Anordnung sehr gewöhnungsbedürftig, da konventionelle Bedienelemente des Telefons, wie Wählscheibe oder Tastatur, nicht mehr genutzt werden können.

Beim Gegenstand der EP-A2-0 141 289 werden die Hauptbestandteile einer Teilnehmersprechstelleneinrichtung durch einen bidirektionalen Bus miteinander verbunden.

Bei der vorgenannten Teilnehmersprechstelleneinrichtung ist von Nachteil, daß einige Hauptbestandteile nur jeweils über ein spezielles Interface an den Bus angeschlossen werden können. Weiterhin von Nachteil ist, daß nur ein einziger Auswahlsteuercomputer alle am Bus angeschlossenen Bestandteile steuert, wodurch entweder erhebliche Verarbeitungszeiten in der Teilnehmersprechstelleneinrichtung entstehen, oder für den Auswahlsteuercomputer ein erheblicher Aufwand erforderlich ist.

Es ist weiterhin aus der DE-A1-40 08 667 bekannt, einen Rechner an den internen Bus und an ein Leitungspaar zur Ubertragung der Nutz-Kanal-Informationen eines digitalen Fernmeldeendgerätes anzuschließen. Der Rechner ist herbei als Modul ausgebildet und wird in das Fernmeldeendgerät eingesetzt.

Von Nachteil bei dieser Gerätekombination ist, daß das Fernmeldeendgerät für das Integrated Services Digital Network (ISDN) geeignet sein muß. Ein analoges Fernmeldeendgerät kann nicht mit einem derartigen Rechner zusammengeschaltet werden, da es keine digitalen Signale erzeugt oder verarbeitet.

Aus der EP-B1-0 092 084 ist eine Fernsprecheinrichtung mit integriertem elektronischem Textgeber zur Abgabe und/oder Aufnahme von Texten bekannt. Die Gesamteinrichtung besteht dabei aus einem Grundgerät und einem oder mehreren Funktionsmodulen, die über Steckvorrichtungen mit dem Grundgerät verbunden werden. Das Grundgerät weist u.a. die Schaltkreise eines Fernsprechapparates, mindestens einen Teil der Steuervorrichtung und einen Teil des Textdatenspeichers auf. In den Funktionsmodulen sind zusätzliche Speicher und zusätzliche Steuervorrichtungen angeordnet.

Ein Nachteil dieser Fernsprecheeinrichtung mit integriertem elektronischem Textgeber besteht darin, daß mehrere Funktionsmodule erforderlich sind, um nur eine zusätzliche Funktion, die des Anrufbeantworters, zu ermöglichen. Weiterhin ist von Nachteil, daß nur eine begrenzte Anzahl zusätzlicher Module mit dem Grundgerät verbunden werden können.

Aus der DE-B1-28 54 516 ist ein Fernsprechapparat mit integriertem Anrufbeantworter bekannt. Zur Speicherung des Sprachsignals werden zwei verschiedene Speicher benutzt, ein digitaler Speicher und ein Magnetbandspeicher, auf dem das analoge Sprachsignal abgespeichert wird.

Dieser Fernsprechapparat mit integriertem Anrufbeantworter weist den Nachteil auf, daß nicht mehr als zwei zusätzliche Baugruppen und keine Baugruppen mit einer anderen Funktion an den Fernsprechapparat angeschlossen werden können.

Der Erfindung liegt die Aufgabe zugrunde, eine Teilnehmereinrichtung derart auszugestalten, daß zusätzliche Module auch zu einem späteren Zeitpunkt an den Bus angeschlossen werden können und daß diese automatisch in einen betriebsbereiten Zustand gebracht werden.

Diese Aufgabe wird dadurch gelöst, daß jedes einzelne Modul der Teilnehmereinrichtung eine bestimmte Gruppe von Funktionen (beispielsweise Teletex-Funktionen oder Funktionen zur Faksimileübertragung) ermöglicht. Die Module werden über einen Bus verknüpft, der eine Ubertragung von digitalen und analogen Signalen ermöglicht. Hierbei sind der Bus und das zur Übertragung benutzte Protokoll so ausgebildet, daß auch eine spätere Erweiterung mit neuartigen Funktionsgruppen möglich ist. Jedes Modul der Teilnehmereinrichtung weist einen Speicher auf, der ein modulspezifisches Steuerprogramm beinhaltet und dessen Anfangsadresse durch die Kennung des Moduls festgelegt wird. Um einen kollisionsfreien Betrieb der Teilnehmereinrichtung sicherzustellen, erhält immer die Steuereinheit des gerade aktiven Moduls die Kontrolle über den gemeinsamen Bus.

Aus der DE-A1-40 08 968 der Anmelderin ist eine Steuereinrichtung zur automatischen Umschaltung der Kommunikationsart bei Teilnehmereinrichtungen, die sich aus mehreren Endgeräten zusammensetzen bekannt. Hierbei wird bei einem ankommenden Ruf die Kommunikationsart der empfangenen Nachricht durch die Steuereinrichtung festgestellt. Danach wird bei Bedarf die Hauptanschlußleitung über eine Umschalteinrichtung mit dem der Kommunikationsart entsprechenden Endgerät der Teilnehmereinrichtung verbunden. Anschließend erzeugt die Steuereinrichtung ein Rufsignal für das ausgewählte Endgerät. Die aus der DE-A1-40 08 968 bekannte Steuereinrichtung zur automatischen Umschaltung der Kommunikationsart wird in der erfindungsgemäßen Teilnehmereinrichtung zur automatischen Auswahl des zu aktivierenden Moduls bei einem ankommenden Ruf benutzt.

Die erfindungsgemäße Teilnehmereinrichtung weist den Vorteil auf, daß alle Funktionsgruppen durch ein separates Modul realisiert werden, wodurch ein schrittweiser Ausbau und eine einfache Austauschbarkeit beim Service möglich ist. Dadurch, daß Sprache und Daten auf dem Bus zur Verfügung stehen, ist über eine Verbindung eines Moduls mit dem Bus der Austausch aller relevanten Signale möglich. Weiterhin haben die Module den Vorteil eine eigene Steuereinheit aufzuweisen, so daß später entwickelte, besonders leistungsstarke Module die Leistungsfähigkeit der gesamten Teilnehmereinrichtung steigern. Dadurch, daß immer nur die Steuereinheit des gerade aktiven Moduls die Kontrolle über den gemeinsamen Bus hat, kann es zu keinem gleichzeitigen Buszugriff mehrerer Steuereinheiten kommen. Weiterhin ist es dadurch möglich einfache Module mit kostengünstigen, weniger komplexen Steuereinheiten auszurüsten. Durch die Mehrfachnutzung von Anzeige und Bedienelementen ist es möglich gerade bei diesen relativ kostenintensiven Funktionsgruppen Einsparungen zu erreichen. Da jedes Modul einen Speicher für sein eigenes Steuerprogramm aufweist, sind auch nachträgliche Ergänzungen der Teilnehmereinrichtung möglich. Weiterhin beinhaltet die jedem Modul zugewiesene Kennung die Anfangsadresse des modulspezifischen Steuerprogramms, so daß die Steuereinheit eines Moduls kollisionsfrei sämtliche Steuerprogramme der Teilnehmereinrichtung aufrufen kann.

Die Ausführungsform der Teilnehmereinrichtung gemäß Patentanspruch 2 weist den Vorteil auf, daß einzelne Module sowohl nahtlos und damit platzsparend aneinandergefügt als auch durch ein Kabel verbunden an einem anderen Platz aufgestellt werden können.

Die Teilnehmereinrichtung nach Patentanspruch 3 weist den Vorteil auf, daß jedem Modul automatisch bei seiner Inbetriebnahme eine Kennung zugewiesen wird, durch die es zweifelsfrei ausgewählt werden kann. Somit kann ein Modul auch problemlos von einem Bus abgetrennt und mit dem Bus einer anderen Teilnehmereinrichtung verbunden werden. Bei der Inbetriebnahme an der anderen Teilnehmereinrichtung wird diesem Modul automatisch eine neue Kennung gegeben, so daß es zu keiner Kollision auf dem Bus kommen kann.

Die Teilnehmereinrichtung nach Patentanspruch 4 weist den Vorteil auf, daß auch spätere Neuentwicklungen an die Teilnehmereinrichtung angeschlossen werden können. Weiterhin ermöglicht ein universelles Ubertragungsprotokoll auf dem gemeinsamen Bus das Zusammenschalten verschiedenartigster Module. Es besteht die Möglichkeit, daß auch ohne Zugriff auf den Bus modulinterne Aktionen durchgeführt werden.

Die Erfindung wird im folgenden anhand in der Zeichnung dargestellter Ausführungsformen näher beschrieben und erläutert. Es zeigt:
- Fig. 1: ein Blockschaltbild der erfindungsgemäßen Teilnehmereinrichtung,
- Fig. 2: eine Ansicht der erfindungsgemäßen Teilnehmereinrichtung, und
- Fig. 3: eine Signalübertragung über die Steuersignalleitung zur Aktivierung eines Moduls

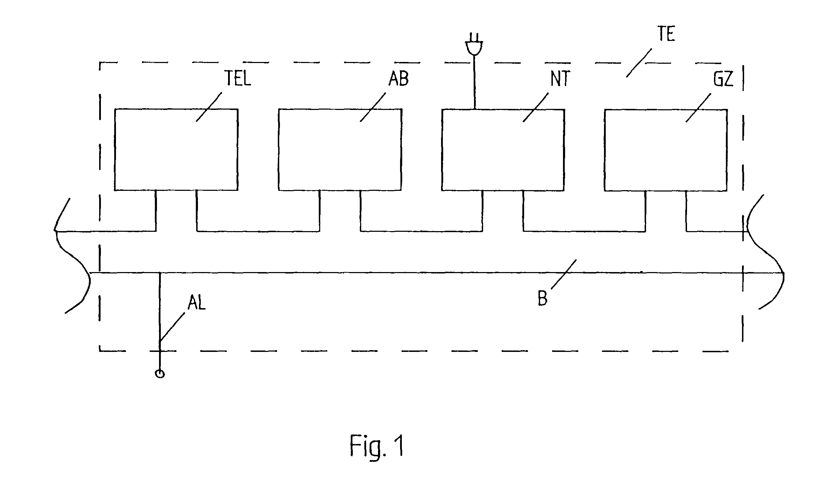

Fig. 1 zeigt die Zusammenschaltung mehrerer Module über einen Bus B. Die Telefoneinheit TEL ist über den Bus B mit einem Fernmeldenetz und mit anderen Modulen der Teilnehmereinrichtung TE verbunden. Dazu gehören ein Anrufbeantworter AB, ein Netzteil NT, das zur Energieversorgung mit dem Wechselspannungsnetz verbunden ist und ein Gebührenzähler GZ. Über den gemeinsamen Bus B werden sowohl digitale (Daten) als auch analoge (Sprache) Signale ausgetauscht. Dadurch können sowohl analog als auch digital realisierte Module über den Bus B verbunden werden. Zusätzlich dient der Bus B der Spannungsversorgung, die durch das Netzteil NT, das am Wechselspannungsnetz angeschlossen ist, sichergestellt wird. Die Telefoneinheit TEL beinhaltet ein herkömmliches Telefon, das über die Hauptanschlußleitung AL, die der Bus B dem Modul zuführt, mit dem Fernsprechnetz verbunden ist. Da die Telefoneinheit TEL einen grundlegenden Bestandteil der Teilnehmereinrichtung darstellt, der meist vorhanden ist (evt. in Form eines schnurlosen Telefons), kann dieses Modul auch ein zentrales Bedien- und Anzeigemodul einschließen. Dadurch kann die Bedienung einer Vielzahl von Modulen zentral durchgeführt werden. Hierbei ist durch eine klare Gliederung der Bedienelemente weitgehend ausgeschlossen, daß der Benutzer durch die Bedienung überfordert wird. Außerdem können modulspezifische Funktionen durch Bedienelemente am Modul selbst ausgelöst werden.

Wird auf der Hauptanschlußleitung AL ein ankommender Ruf signalisiert, wird von der gerade aktiven Steuereinheit der Teilnehmereinrichtung zunächst die Kommunikationsart der empfangenen Nachricht festgestellt und gegebenenfalls eine Umschaltung auf das der Kommunikationsart entsprechende Modul vorgenommen. Für diese automatische Aktivierung eines Moduls wird von einem ersten Modul die Kennung K eines zweiten Moduls auf die Steuersignalleitung des gemeinsamen Busses B ausgegeben. Sobald das zweite Modul seine Kennung K erkannt hat, gibt es die eigene Kennung K noch einmal auf die Steuerleitung aus. Danach empfängt das zweite Modul die Nachricht. Wird beispielsweise ein ankommender Telefonanruf von der Steuereinheit eines anderen Moduls erkannt, gibt diese Steuereinheit die Kennung des Telefonmoduls TEL aus. Diese wird vom Telefonmodul TEL erkannt, ebenfalls ausgegeben, und dem Benutzer wird der ankommende Ruf signalisiert. Nun hat dieser die Möglichkeit den Handapparat des Telefonmoduls TEL abzuheben (und damit den Gabelumschalter zu betätigen). Dadurch wird dieses Modul aktiviert. Die Steuereinheit des Telefonmoduls TEL übernimmt dann die Kontrolle über den gemeinsamen Bus B. Der Anruf kann nun entgegengenommen werden. Wird der Gabelumschalter des Telefonmoduls TEL nicht betätigt, so schaltet sich beispielsweise der Anrufbeantworter AB ein, falls dieser im Bereitschaftsbetrieb war. Die Bedienung und Anzeige von Betriebszuständen des Anrufbeantworters AB kann hierbei von der zentralen Bedien- und Anzeigeeinheit aus erfolgen, die im Telefonmodul TEL integriert ist. Der Anrufbeantworter AB selbst (Bandlaufwerk(e) und/oder elektrische Schaltungen) kann vom Telefonmodul TEL entfernt aufgestellt werden.

Soll von der Teilnehmereinrichtung TE eine Verbindung über das Fernsprechnetz aufgebaut werden, so betätigt der Benutzer in gewohnter Weise zunächst den Gabelumschalter des Telefonmoduls TEL. Dadurch ist dieses Modul aktiviert. Danach besteht die Möglichkeit über die in des Telefonmoduls TEL integrierte Bedieneinheit die gewünschte Rufnummer ziffernweise einzugeben oder mittels eines Moduls zur Zielwahl (nicht gezeichnet) durch einen einzigen Tastendruck dieses Modul zu aktivieren und die gewünschte Rufnummer zu wählen. Wurde eine Zielwahl durchgeführt, so inaktiviert sich anschließend das Zielwahl-Modul und das Telefonmodul TEL erhält wieder die Kontrolle über den gemeinsamen Bus B. Es besteht die Möglichkeit die gewählte Rufnummer von der Anzeigeeinheit anzeigen zu lassen. Falls das Zielwahl-Modul weitere Informationen zu dieser Rufnummer zu Verfügung stellt (Name, Adresse, Bemerkung usw.), können auch diese von der Anzeigeeinheit dargestellt werden. Während der Anzeige der der Rufnummer zugeordneten Daten kann der Benutzer das Telefongespräch führen oder gegebenenfalls über ein ebenfalls am Bus B und an einer Datenverarbeitungsanlage angeschlossenes Modem-Modul (nicht gezeichnet) eine Datenfernübertragung über das Fernmeldenetz durchführen. Um den Modem zu aktivieren ist ein an der Bedieneinheit oder am Modem angeordnetes Bedienelement zu betätigen. Sind die Bedien- und Anzeigeelemente des Modems im Bedien- und Anzeigemodul integriert, so kann der Modem, über ein Kabel mit der Teilnehmereinrichtung TE verbunden, auch integriert in eine Datenverarbeitungsanlage realisiert werden. Auf die Bedienung der am Modem angeschlossenen Datenverarbeitungsanlage soll hier nicht eingegangen werden. Beim Aussenden eines Rufs kann ein Gebührenzähler GZ, der ebenfalls als Modul am Bus B angeschlossen ist, gestartet werden, so daß die benötigten Gebühreneinheiten oder die bereits entstandenen Kosten auf der Anzeigeeinheit angezeigt werden.

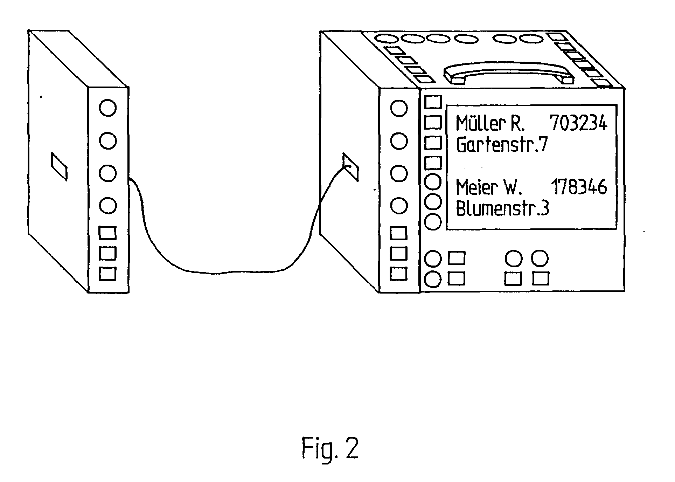

In Fig. 2 ist eine Möglichkeit dargestellt die modulare Teilnehmereinrichtung aufzustellen. Sämtliche Module mit Bedienelementen müssen selbstverständlich in Reichweite des Benutzers plaziert sein. Dabei ist aber nicht erforderlich, daß sie alle an der gleichen Stelle aufgestellt sind. Sie können auch durch ein Kabel, das den Bus B realisiert, verbunden werden. Die Module mit Anzeigeelementen müssen zumindest in Sichtweite aufgestellt werden. Sämtliche andere Module, die weder Bedien- noch Anzeigeelemente aufweisen, können, um beispielsweise Platz zu sparen, auch weiter entfernt aufgestellt werden. Die Module selbst haben vorzugsweise zwei identische Außenabmessungen, um im zusammengefügten Zustand einen ausgewogenen Gesamteindruck zu vermitteln. Jedes Modul weist mindestens zwei Anschlußmöglichkeiten für den gemeinsamen Bus B auf, über die es mit den anderen Modulen verbunden wird.

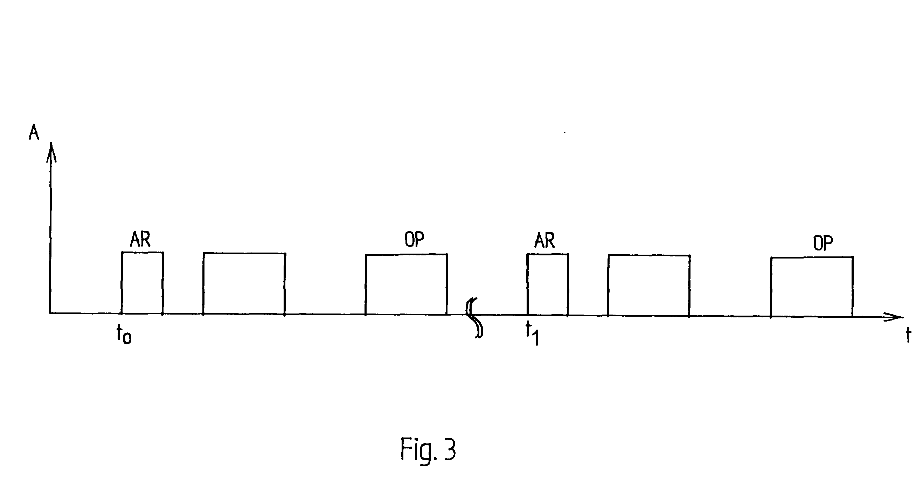

Fig. 3 zeigt den Signalverlauf auf der Steuersignalleitung. Wurde ein Modul neu aktiviert, so gibt dieses Modul seine Kennung K über die Steuersignalleitung zum Zeitpunkt t aus. Die Kennungsübertragung wird dabei durch ein Startbit AR eingeleitet und durch ein Stopbit OP beendet. Zwischen diesen beiden Bit wird die Kennung binär codiert übertragen. Alle anderen Module der Teilnehmereinrichtung TE empfangen diese Kennung K. Für inaktive Module wird dadurch signalisiert, daß sie vorläufig keine eigene Kennung K über die Steuersignalleitung übertragen dürfen; für das bisher aktive Modul bedeutet dies, den Bus B freizugeben. Sobald das bisher aktive Modul den Bus B nicht mehr benötigt, wird auf der Steuersignalleitung die empfangene Kennung K zum Zeitpunkt t erneut ausgegeben und seine Steuereinheit inaktiviert. Das Modul mit dieser Kennung K (das den Bus angefordert hat) aktiviert daraufhin seine Steuereinheit.

Wird ein Modul neu an den Bus B angeschlossen, sendet dieses Modul ein spezielles Codewort über die Steuersignalleitung an die gerade aktive Steuereinheit. Dadurch wird zum einen der gerade aktiven Steuereinheit mitgeteilt, daß eine neue Kennung zu vergeben ist, zum anderen wird durch dieses Codewort auch die Kommunikationsart festgelegt, die das neue Modul verarbeiten kann. So ist beispielsweise für ein schnurgebundenes Telefon und ein schnurloses Telefon das gleiche Codewort, für ein Telefaxgerät ein anderes Codewort erforderlich. Die gerade aktive Steuereinheit weist dann dem neuen Modul eine neue Kennung K zu, die bisher noch nicht verwendet wird. Eine derartige Kennung K besteht aus zwei Teilen, einem ersten Teil, der für jedes an der Teilnehmereinrichtung angeschlossene Modul unterschiedlich ist, um ein Modul allein auswählen zu können und eine zweiten Teil, der die Kommunikationsart angibt, die das Modul verarbeiten kann. Somit ist durch die Speicherung der Kennung K eines Moduls gleichzeitig bekannt, für welche Art von über das Fernmeldenetz übertragener Nachrichten es sich eignet. Die neue Kennung K wird über die Steuersignalleitung an das neue Modul übertragen und im neuen Modul gespeichert.

Diese Kennung K dient zum einen dazu ein spezielles Modul auswählen zu können, sie beinhaltet aber auch die Startadresse des Speichers, der das Steuerprogramm des Moduls beinhaltet. Durch die unterschiedlichen Kennungen K der Module ist sichergestellt, daß nicht mehrere Steuerprogramme einen identischen Adressbereich aufweisen. Weiterhin ist dadurch die Möglichkeit gegeben das Steuerprogramm der Teilnehmereinrichtung TE, das sich aus den Steuerprogrammen der Module zusammensetzt, modular zu gestalten. Der Speicher für die Steuerprogramme kann in Bereiche aufgeteilt werden, so daß durch die Kennung K ein Speicherbereich definiert wird. Beispielsweise entspräche einer Kennung K von 3 eine Startadresse des Steuerprogramms des Moduls von z.B. 3000. Dadurch, daß alle am Bus B angeschlossene Module alle bereits vergebenen Kennungen K in ihrem Speicher abspeichern, kann jedes Modul auf jedes andere Modul zugreifen.

## Patentansprüche

1. Modulare Teilnehmereinrichtungen mit einer Verbindung (AL) zu einem Fernsprechnetz, deren Module über Steckvorrichtungen an einen Bus (B) angeschlossen werden, der Leitungen für die Signale des Fernsprechnetzes, für Daten, Adressen und Steuersignale sowie für die Spannungsversorgung aufweist, wobei ein Modul ein bestimmtes Leistungsmerkmal, insbesondere eine Sprachsteuerung oder eine Rufnummernspeicherung, oder ein Endgerät, insbesondere Fernsprechapparat, Anrufbeantworter oder Telekopierer realisiert,
**dadurch gekennzeichnet,** daß jedes Modul einen Speicher aufweist, der ein modulspezifisches Steuerprogramm und eine Liste mit den Kennungen (K) aller am selben Bus (B) angeschlossenen Module enthält, daß durch die Kennung (K) eines Moduls gleichzeitig die Startadresse des Speichers für das modulspezifische Steuerprogramm festgelegt ist, daß durch Betätigen von Bedienelementen durch den Benutzer ein Modul ausgewählt wird, dessen Steuereinheit die Kontrolle über den Bus (B) übernimmt, und daß Module, die nicht ausgewählt sind nur Funktionen durchführen, bei denen sie nicht auf den Bus (B) zugreifen.

2. Modulare Teilnehmereinrichtung nach Anspruch 1,
**dadurch gekennzeichnet,** daß Stecker und Buchsen an einander gegenüberliegenden Seitenflächen der Module vorgesehen sind, wodurch Module ohne seitlichen Zwischenraum zusammengesteckt werden können und zumindest Vorder- und Oberseite der Module eine ebene Fläche bilden oder daß zur Verbindung zweier Module ein Kabel verwendet wird, wodurch Module auch entfernt voneinander aufgestellt werden können.

3. Teilnehmereinrichtung nach Anspruch 1 oder 2,
**dadurch gekennzeichnet,** daß jedem Modul durch die gerade aktive Steuereinrichtung bei dessen Inbetriebnahme am Bus (B) eine Kennung (K) zugewiesen wird, die kein anderes der am selben Bus (B) angeschlossenen Module aufweist.

4. Teilnehmereinrichtung nach einem oder mehreren der Ansprüche 1 bis 3,
**dadurch gekennzeichnet** und derart ausgestaltet, daß zum Datenaustausch auf dem alle Module verbindenden Bus (B) die Steuereinheit eines durch den Benutzer neu aktivierten zweiten Moduls zunächst die eigene Kennung (K) über eine Steuersignalleitung des Busses (B) aussendet, wodurch die Kontrolle über den Bus (B) von einem bisher aktiven ersten Modul angefordert wird, daß die Steuereinheit des bisher aktiven ersten Moduls sich inaktiviert und die Kontrolle über den Bus (B) abgibt, indem die Kennung (K) des neu aktivierten zweiten Moduls vom ersten Modul über die Steuersignalleitung ausgegeben wird, daß erst danach das neu aktivierte zweite Modul Signale über den Bus (B) weiterleitet, daß inaktive Module keine Signale an die Steuersignalleitung abgeben, sobald eine Kennung (K) zum ersten mal auf der Steuersignalleitung detektiert wurde, und daß inaktive Module ihre Kennung (K) wieder über die Steuersignalleitung ausgeben können, sobald eine Kennung (K) zum zweiten mal auf der Steuersignalleitung detektiert wurde.

## Claims

1. Modular subscriber apparatuses which have a connection (AL) to a telecommunications network and whose modules are connected via plug devices to a bus (B) which comprises lines for the signals of the telecommunications network, for data, addresses and control signals and also for the voltage supply, a module implementing a certain performance feature, in particular a speech control system or a call number storage or a terminal appliance, in particular a telephone set, telephone answering machine or telefax machine, characterized in that each module has a memory which contains a module-specific control program and a list containing the identifications (K) of all the modules connected to the same bus (B), in that the start address of the memory for the module-specific control program is fixed at the same time by the identification (K) of a module, in that, as a result of the user actuating control elements, a module is selected whose control unit takes over the control of the bus (B), and in that the modules which have not been selected perform only functions in which they do not access the bus (B).

2. Modular subscriber apparatus according to Claim 1, characterized in that plugs and sockets are provided at mutually opposite side faces of the modules, as a result of which modules can be plugged together without lateral gap and at least the front and top of the modules form a flat face, or in that, to connect two modules, a cable is used, as a result of which modules can also be set up remotely from one another.

3. Subscriber apparatus according to Claim 1 or 2, characterized in that each module is assigned by the currently active control apparatus when it is put into service on the bus (B) an identification (K) which no other modules connected to the same bus (B) have.

4. Subscriber apparatus according to one or more of Claims 1 to 3, characterized and configured in that, for the purpose of data exchange on the bus (B) connecting all the modules, the control unit of a second module newly activated by the user first outputs its own identification (K) via a control signal line of the bus (B), as a result of which the control of the bus (B) is requested by a hitherto active first module, in that the control unit of the first module hitherto active is deactivated and outputs the control of the bus (B) as a result of the identification (K) of the newly activated second module being outputted by the first module via the control signal line, in that the newly activated second module only then transmits signals via the bus (B) in that inactive modules output no signals to the control signal line as soon as an identification (K) has been detected for the first time on the control line, and in that inactive modules can again output their identification (K) again via the control signal line as soon as an identification (K) has been detected for the second time on the control signal line.

## Revendications

1. Dispositifs modulaires d'abonnés téléphoniques comportant une liaison (AL) avec un réseau téléphonique, dont les modules sont raccordés par l'intermédiaire de dispositifs de connexion à un bus (B), qui comporte des lignes pour les signaux du réseau téléphonique, pour des données, des adresses et des signaux de commande ainsi que pour la tension d'alimentation, un module produisant une caractéristique potentielle déterminée, notamment une commande de la parole ou une mémorisation de numéros d'appel, ou un appareil terminal, notamment un appareil téléphonique, un répondeur téléphonique ou un télécopieur, caractérisés en ce que chaque module comporte une mémoire, qui contient un programme de commande spécifique au module et une liste comportant les indicatifs (K) de tous les modules raccordés au même bus (B), que simultanément l'adresse de départ de la mémoire pour le programme de mémoire spécifique à un module est fixée au moyen de l'indicatif (K) de ce module, qu'un module, dont l'unité de commande assume le contrôle par l'intermédiaire du bus (B), est sélectionné par actionnement d'éléments de commande par l'utilisateur et que des modules, qui ne sont pas sélectionnés, exécutent uniquement des fonctions, dans lesquelles ils n'accèdent pas au bus (B).

2. Dispositif d'abonné modulaire selon la revendication 1, caractérisé en ce que des fiches mâles et dés douilles sont prévus sur des surfaces latérales, réciproquement en vis-à-vis, des modules, ce qui a pour effet que des modules peuvent être interconnectés sans espace intercalaire latéral et qu'au moins la face avant et la face supérieure des modules forment une surface plane, ou que pour la liaison de deux modules, on utilise un câble, ce qui permet d'installer des modules également dans des positions réciproquement éloignées.

3. Dispositif d'abonné selon la revendication 1 ou 2, caractérisé en ce que le dispositif de commande précisément actif affecte à chaque module, lors de la mise en fonctionnement de ce module, dans le bus (B), un indicatif (K) que ne possède aucun autre des modules raccordés au même bus (B).

4. Dispositif d'abonné selon une ou plusieurs des revendications 1 à 3, caractérisé et agencé de telle sorte que pour l'échange des données dans le bus (B) reliant tous les modules, l'unité de commande d'un second module nouvellement activé par l'utilisateur émet tout d'abord l'indicatif propre (K) par l'intermédiaire d'une ligne de transmission de signaux de commande du bus (B), ce qui a pour effet que le contrôle du bus (B) est demandé d'un premier module actif jusqu'alors, que l'unité de commande du premier module actif jusqu'alors est désactivée et libère le contrôle du bus (B) par le fait que l'indicatif (K) du second module nouvellement activé est délivré par le premier module par l'intermédiaire de la ligne de transmission de signaux de commande, que c'est ensuite seulement que le second module nouvellement activé retransmet des signaux par l'intermédiaire du bus (B), que des modules inactifs ne délivrent aucun signal à la ligne de transmission de signaux de commande, dès qu'un indicatif (K) a été détecté pour la première fois dans la ligne de transmission de signaux de commande, et que des modules inactifs peuvent délivrer leur indicatif (K) à nouveau par l'intermédiaire de la ligne de transmission de signaux de commande dès qu'un indicatif (K) a été détecté pour la seconde fois dans la ligne de transmission de signaux de commande.
